# EUROPEAN PATENT APPLICATION

(11) **EP 3 228 596 A1**
(43) Date of publication of application: **11.10.2017**
(21) Application number: 15865247.9
(22) Date of filing: 31.07.2015
(51) Int. Cl.: C02F 1/00, B01D 24/10

(54) **WATER PURIFICATION DEVICE**

(30) Priority: 02.12.2014 CN 201410723244
(71) Applicant: Shenzhen MYS Environmental Protection & Technology Company Ltd., Shenzhen, Guangdong 518100 (CN)
(72) Inventor: SU, Peixin, Shenzhen Guangdong 518000 (CN)
(74) Representative: Cabinet Chaillot
(86) International application number: PCT/CN2015/085724
(87) International publication number: WO 2016/086680

(57) **Abstract**

The invention discloses a water purification device, comprising a first pressure cylinder, a second pressure cylinder, a first cylinder block and a second cylinder block, wherein the first pressure cylinder, the second cylinder block and the second pressure cylinder are arranged successively from bottom to top, and the second cylinder block is arranged inside the first cylinder block; the first pressure cylinder and the second pressure cylinder both are open at one end and formed with a first through-hole at the other end, and enclosed; the first cylinder block and the second cylinder block both are open at two ends and arranged in a shape of hollow cylinder; a water inlet, which is communicated with flow passages formed between the first cylinder block and the second cylinder block, is formed on the second cylinder block, and a water outlet pipe communicated with the first cylinder block is inserted into an outer wall of the second cylinder block. According to the water purification device disclosed by the invention, the full filtration of the water is achieved under the action of pressures of the first pressure cylinder and the second pressure cylinder; the water treatment intensity is enhanced; and the degree of contamination of a filter material by floating substances is reduced, so that the service life of the filter material is greatly prolonged, and the water purification cost is lowered.

## Description

### Field of the Invention

The invention relates to the field of water treatment, and more particularly to a water purification device.

### Background of the Invention

China is a country very short of water resources, seriously affecting people's living conditions. In recent years, the problem on urban and rural domestic sewage has become prominent, and the domestic sewage from many urban residents is subject to centralized treatment after flowing together into a sewerage network. However, the sewerage network is still not established in some towns and in the vast rural areas due to the disequilibrium of economic and social development, so that the discharge of the domestic sewage is in a disordered state with universal phenomenon of discharging the sewage directly and indiscriminately, resulting in the deterioration of water quality in some rivers and increasing the contribution rate to the water pollution year by year. If things continue this way, it surely will greatly threaten people's health. Therefore, people have to devote greater effort in the sewage treatment in order to relieve stress on sewage treatment.

During the sewage treatment, substances of larger particle size are usually removed from the sewage by filtering first, e.g., the sediment is removed from the sewage through a mixture of activated carbon and quartz sand. However, the existing sewage treatment devices have a poor effect in removing the floating substances, e.g. oil stains or other floating organic substances, from the sewage. The floating substances are often blocked in a filter material after the filtration, resulting in that the filter material is contaminated and difficult to remove contaminants, and the water will be in secondary contamination.

### Summary of the Invention

A main objective of the invention is to provide a water purification device to solve the problem that the existing water purification devices have a poor effect in filtering floating substances in the water.
To achieve the above objective, a water purification device is provided, wherein the water purification device comprises a first pressure cylinder, a second pressure cylinder, a first cylinder block and a second cylinder block; the first pressure cylinder, the second cylinder block and the second pressure cylinder are successively connected to each other, and the first cylinder block is accommodated in the second cylinder block;
Two opposite ends of the first cylinder block are provided with openings arranged in a hollow shape, and the first cylinder block is configured to accommodate a filter material for filtering water; two opposite ends of the second cylinder block are provided with openings arranged in a hollow shape; the first pressure cylinder comprises a first water flow end provided with an opening for the water to flow, and a first drainage end formed with a first through-hole for the water to flow; and the second pressure cylinder is arranged in a hollow shape and comprises a second water flow end provided with an opening for the water to flow, and a second drainage end formed with a second through-hole for the water to flow;
One end of the second cylinder block is connected to the first water flow end, and the other end thereof is connected to the second water flow end; first flow passages, which are communicated with the first pressure cylinder and the second pressure cylinder, are formed between the first cylinder block and the second cylinder block; a water inlet communicated with the first flow passage is formed on an outer wall of the second cylinder block, and a water outlet pipe communicated with the first cylinder block is further inserted into the outer wall of the second cylinder block; and
Prior to the water filtration of the water purification device, the first through-hole is in a closed state and the second through-hole is in an open state; during the sewage discharge of the device, the first through-hole and the second through-hole both are opened.

Preferably, a first connecting piece, which is configured to connect the first cylinder block and the second cylinder block to the first pressure cylinder, is further arranged between the second cylinder block and the first pressure cylinder; first diversion holes configured to communicate the first flow passage with the first pressure cylinder and second diversion holes configured to communicate the first cylinder block with the first pressure cylinder are arranged on the first connecting piece.

Preferably, the first connecting piece comprises a first connecting plate having a through-hole formed thereon, a periphery of the through-hole extends in a direction deviated from a surface of the first connecting plate to form a first circular cylinder, and a first baffle for closing ports of the first circular cylinder is arranged at one end of the first circular cylinder away from the first connecting plate, and the second diversion holes are arranged on the first baffle; peripheries of the second diversion holes extend in a direction deviated from a surface of the first baffle to form a second circular cylinder, and the first diversion holes are arranged on the first baffle on the periphery of the second circular cylinder; the first circular cylinder is located between the first connecting plate and the second circular cylinder, and the caliber of the first circular cylinder is greater than that of the second circular cylinder.

Preferably, the first circular cylinder is perpendicular to the first connecting plate and the second circular cylinder is perpendicular to the first baffle.

Preferably, a second baffle for closing ports of the second circular cylinder is arranged at one end of the second circular cylinder away from the first baffle, and a pressurizing hole is formed on the second baffle.

Preferably, a first reinforcer, connected to the first connecting piece, is sleeved at a position on the first water flow end corresponding to an outer wall of the first pressure cylinder.

Preferably, a second connecting piece, which is configured to connect the second cylinder block to the second pressure cylinder, is arranged between the second cylinder block and the second pressure cylinder, third diversion holes configured to communicate the first flow passage with the first cylinder block and a fourth diversion hole communicated with the first cylinder block are arranged on the second connecting piece.

Preferably, a second reinforcer, connected to the second connecting piece, is sleeved at a position on the second water flow end corresponding to an outer wall of the second pressure cylinder.

Preferably, two baffles, having a plurality of through-holes formed thereon, are arranged in the first cylinder block and divide an inner chamber of the first cylinder block into a first filtering zone, a temporary storage zone and a second filtering zone which are arranged in the radial direction along the first cylinder block; the water outlet pipe is communicated with the temporary storage zone after passing through the outer wall of the second cylinder block.

Preferably, a first drainage pipe is inserted into the first through-hole and a second drainage pipe is inserted into the second through-hole, and water flow regulating valves are arranged on both of the first drainage pipe and the second drainage pipe.

According to the water purification device disclosed by the invention, the full filtration of the water to be purified is achieved under the action of pressures of the first pressure cylinder and the second pressure cylinder; the floating substances are discharged from the water, and the water purification intensity is enhanced; the degree of contamination of a filter material by the floating substances is reduced, so that the service life of the filter material is greatly prolonged, and the water purification cost is lowered.

### Brief Description of the Drawings

Fig. 1 is a stereoscopic structure diagram of an embodiment of a water purification device according to the invention;
Fig. 2 is a structure diagram of a first pressure cylinder of the water purification device in Fig. 1;
Fig. 3 is a structure diagram of a second pressure cylinder of the water purification device in Fig. 1;
Fig. 4 is a structure diagram of a first connecting piece of the water purification device in Fig. 1;
Fig. 5 is a structure diagram of a second connecting piece of the water purification device in Fig. 1;
Fig. 6 is a structural schematic plan from a side view of the water purification device in Fig. 1;
Fig. 7 is a structural schematic plan from another view of the water purification device in Fig. 6;
Fig. 8 is a schematic cross-sectional view of an embodiment along A-A line of the water purification device in Fig. 7;
Fig. 9 is a schematic cross-sectional view of an embodiment along A-A line of the water purification device having a filter material arranged in a first cylinder block in Fig. 7; and
Fig. 10 is a schematic cross-sectional view of another embodiment along A-A line in Fig. 7, in which arrows indicate water flow directions during the water purification.

The objective achievement, functional characteristics and advantages of the invention will be further described with reference to the embodiments and accompanying drawings.

### Detailed Description

It should be understood that the preferred embodiments described herein are not used for limiting for the invention, but for explaining the invention.

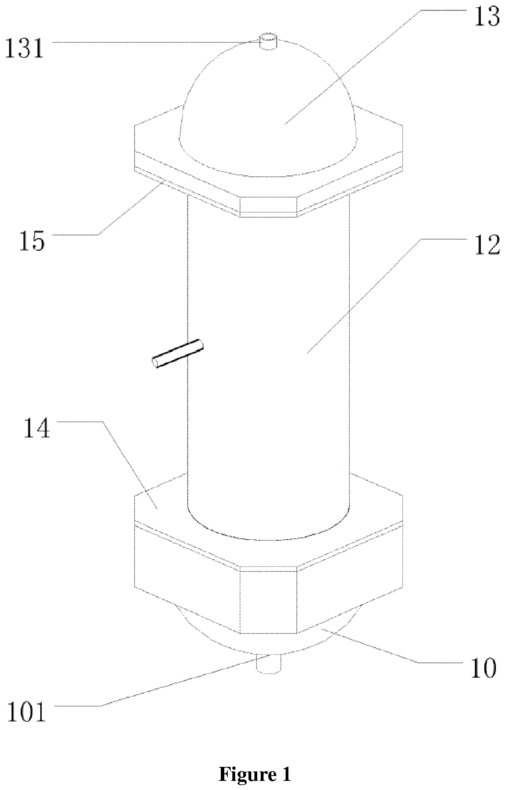

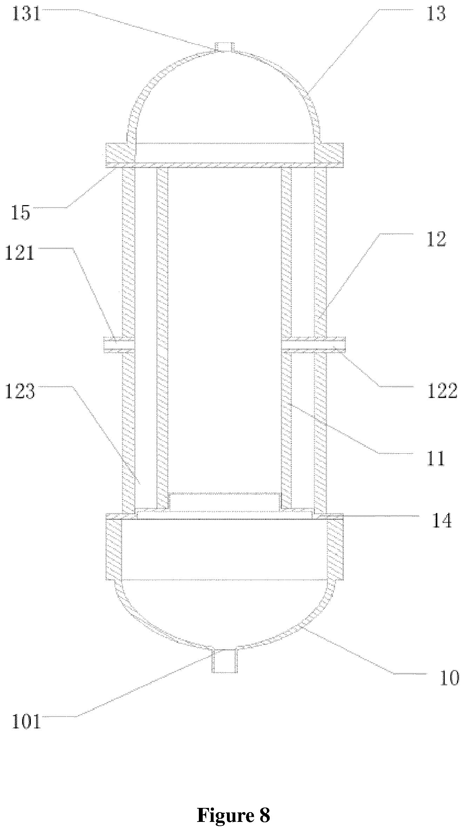

The invention provides a water purification device, in an embodiment and with reference to Fig. 1, the water purification device comprises a first pressure cylinder 10, a first cylinder block 11 (See Fig. 8), a second cylinder block 12 and a second pressure cylinder 13. The first pressure cylinder 10, the second cylinder block 12 and the second pressure cylinder 13 and the first connecting piece 15 are successively connected to each other, and the first cylinder block 11 is accommodated in the second cylinder block 12.

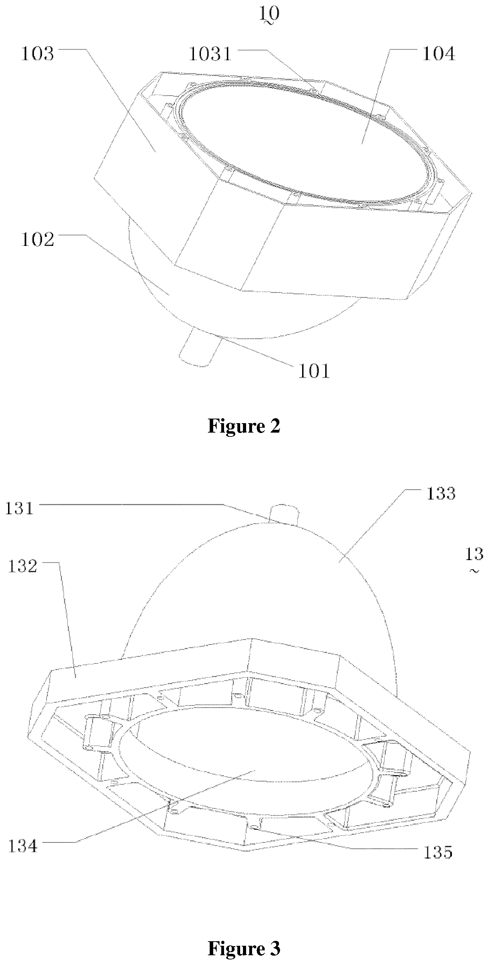

With reference to Fig. 2, the first pressure cylinder 10 comprises a first water flow end 104 and a first drainage end 102. In the embodiment, the first water flow end 104 and the first drainage end 102 are arranged oppositely, and the first water flow end 104 is provided with an opening for the water to flow. The first drainage end 102 is provided with a first through-hole 101 for the water to flow.

With reference to Fig. 8, two ends of the second cylinder block 11 are provided with openings arranged in a shape of hollow cylinder.

Two ends of the second cylinder block 12 are provided with openings arranged in a shape of hollow cylinder.

With reference to Fig. 3, the second pressure cylinder 13 comprises a second water flow end 134 and a second drainage end 133. In the embodiment, the second water flow end 134 and the second drainage end 133 are arranged oppositely, and the second water flow end 134 is provided with an opening for the water to flow. The second drainage end 133 is provided with a second through-hole 131 for the water to flow.

One end of the second cylinder block 12 is connected to the first water flow end 104, and the other end thereof is connected to the second water flow end 134. The first cylinder block 11 is fixedly installed in the second cylinder block 12. First flow passages 123, which are communicated with the first pressure cylinder 10 and the second pressure cylinder 13, are formed between the first cylinder block 11 and the second cylinder block 12. A water inlet 121 communicated with the first flow passage 123 is formed on an outer wall of the second cylinder block 12, and a water outlet pipe 122 communicated with the first cylinder block 11 is inserted into an outer wall of the water purification device. Preferably, the water inlet 121 and the water outlet pipe 122 are arranged oppositely.

Prior to the water filtration of the water purification device, the first through-hole 101 is in a closed state and the second through-hole 131 is in an open state. During the sewage discharge of the device, the first through-hole 101 and the second through-hole 131 both are opened.

Specifically, the water purification device is placed vertically during the filtration, i.e., the first pressure cylinder 10 is located at the bottom of the water purification device and the second pressure cylinder 13 is located at the top of the water purification device. When the water to be purified enters the first flow passages 123 from the water inlet 121, the water to be purified enters the first pressure cylinder 10 first. As the water to be purified gradually increases, the water level gradually rises, the water to be purified is gradually forced into the filter material (e.g., a mixture of activated carbon and quartz sand) in the first cylinder block 11 under the action of the water pressure and the pressure of the first pressure cylinder 10, and discharged from the water outlet pipe 122 after being filtered by the filter material. During the filtration, the first through-hole 101 is closed first; the water level of the water to be purified gradually rises in the first flow passages 123 until the water rises into the second pressure cylinder 13 and then is discharged through the second through-hole 131. In this process, firstly, part of sediment or other large-grained impurities in the water to be purified are precipitated at the bottom of the first pressure cylinder 10 due to gravity on the one hand and due to the filtration of the filter material on the other hand. The sediment, not precipitated in the water to be purified, is blocked and remains in the first pressure cylinder 10, and the impurities not precipitated and the sediment precipitated both can be discharged by opening the first through-hole 101. Secondly, since the floating substances in the water to be purified are located on the surface of the water body, the floating substances can be discharged through the second through-hole 131 when the water level of the water to be purified in the first flow passages 123 rises up to the second pressure cylinder 13.

According to the water purification device disclosed by the invention, on the one hand, the large-grained impurities such as sediment in the water to be purified are discharged from the first through-hole 101 under pressures of the first pressure cylinder 10 and the second pressure cylinder 13, and the floating substances in the water to be purified are discharged from the second through-hole 131 so as to achieve the full filtration of the water to be purified and enhance the intensity of the water purification. In the water purification device, the degree of contamination of the filter material by the floating substances is further reduced, so that the service life of the filter material is greatly prolonged, and the water purification cost is lowered.

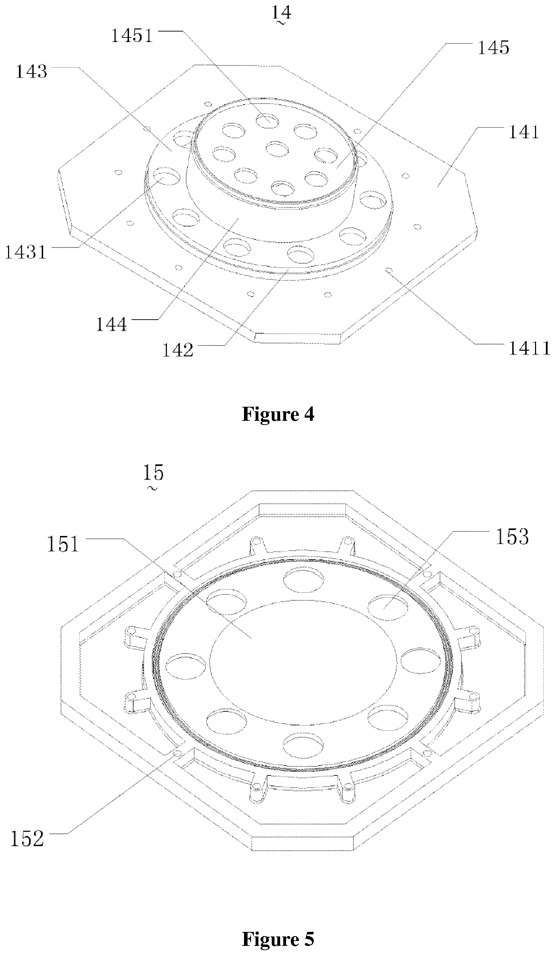

Further, with reference to Fig.4, a first connecting piece 14, which is configured to connect the first cylinder block 11 and second cylinder block 12 to the first pressure cylinder 10, is arranged between the second cylinder block 12 and the first pressure cylinder 10. First diversion holes 1431 configured to communicate the first flow passages 123 with the first pressure cylinder 10, and second diversion holes (not shown) configured to communicate the first cylinder block 11 with the first pressure cylinder 10 are arranged on the first connecting piece 14.

Specifically, the first connecting piece 14 comprises a first connecting plate 141 having a through-hole formed thereon, a periphery of the through-hole extends in a direction deviated from a surface of the first connecting plate 141 to form a first circular cylinder 142, and a first baffle 143 for closing ports of the first circular cylinder 142 is arranged at one end of the first circular cylinder 142 away from the first connecting plate 141, and the second diversion holes are arranged on the first baffle 143. Peripheries of the second diversion holes extend in a direction deviated from a surface of the first baffle 143 to form a second circular cylinder 144, and the first diversion holes 1431 are further arranged on the first baffle 143 on the periphery of the second circular cylinder 144. The first circular cylinder 142 is located between the first connecting plate 141 and the second circular cylinder 144, and the caliber of the first circular cylinder 142 is greater than that of the second circular cylinder14 4. It should be noted that, preferably, the first circular cylinder 142 is perpendicular to the first connecting plate 141; preferably, the second circular cylinder 144 is perpendicular to the first baffle 143.

Hereby, the first connecting plate 141 is configured to close the first water flow end 104 of the first pressure cylinder 10 and is fixedly connected (e.g. in threaded connection) to the first pressure cylinder 10. The first cylinder block 11 and the second circular cylinder 144 are sleeved with and hermetically connected to each other. The second cylinder block 12 and the first circular cylinder 142 are sleeved with and hermetically connected to each other. In this way, the tightness of the connection between the first cylinder block 11 and second cylinder block 12 and the first pressure cylinder 10 is enhanced.

Further, a second baffle 145 for closing ports of the second circular cylinder 144 is arranged at one end of the second circular cylinder 144 away from the first baffle 143, and a pressurizing hole 1451 is formed on the second baffle 145.

Since the filter material itself has a relatively high resistance to the water flow, in the embodiment, the water is forced into the filter material more easily by arranging the pressurizing hole 1451 in order to enhance the rate of water filtration. When the water to be filtered enters the first pressure cylinder 10 (the first through-hole 101 is in a closed or partially closed state), the water to be purified is gradually forced into the filter material from the first water flow end 104 by the first pressure cylinder 10. Under the same pressure, a decrease of the area of an opening for the water to flow into the filter material means an increase of the pressure intensity for the water to flow into the filter material, so that the water flow enters the filter material more easily and the water treatment intensity and efficiency are enhanced.

Further, with reference to Fig. 2, a first reinforcer 103, connected to the first connecting piece 14, is sleeved at a position on the first water flow end 104 corresponding to an outer wall of the first pressure cylinder 10.

Specifically, in the embodiment, a first reinforcer 103, connected to the first connecting piece 14, is sleeved at a position on the first water flow end 104 corresponding to an outer wall of the first pressure cylinder 10, in order to reinforce the connection between the first connecting piece 14 and the first pressure cylinder 10. The first reinforcer 103 and the connecting piece 14 are in threaded connection. The first pressure cylinder 10 and the first connecting piece 14 are in threaded connection through screw holes 1031 in Fig. 2 and screw holes 1411 in Fig. 4.

Further, a second connecting piece 15, which is configured to connect the second cylinder block 12 to the second pressure cylinder 13, is arranged between the second cylinder block 12 and the second pressure cylinder 13, third diversion holes 153 configured to communicate the first flow passage 123 with the first cylinder block 153 and a fourth diversion hole 151 communicated with the first cylinder block 11 are arranged on the second connecting piece 15. A second reinforcer 132, connected to the second connecting piece 15, is sleeved at a position on the second water flow end 134 corresponding to an outer wall of the second pressure cylinder 13.

With reference to Fig.3, screw holes 135 are formed on the second reinforcer 132. With reference to Fig.5, screw holes 152 are formed on the periphery of the third diversion holes 153 of the second connecting piece 15. The second pressure cylinder 13 and the second connecting piece 15 are in threaded connection by the same screws through the screw holes 135 and the screw holes 152.

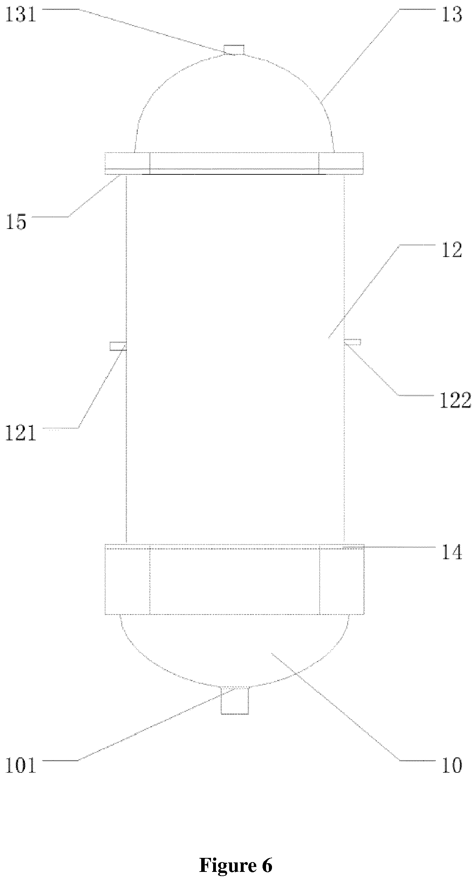

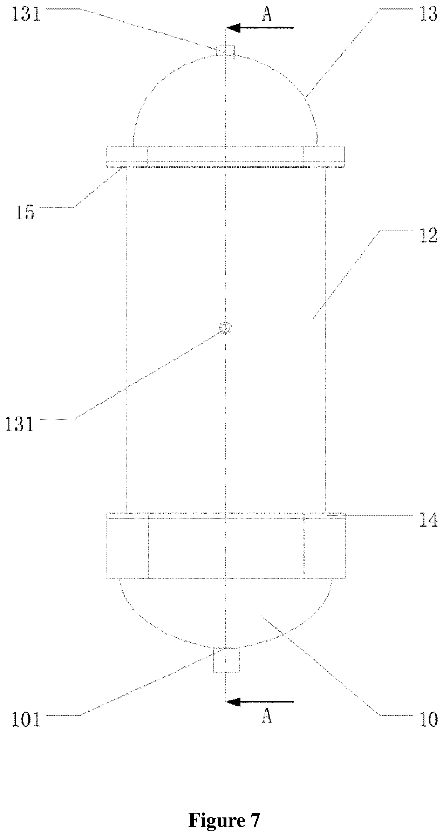

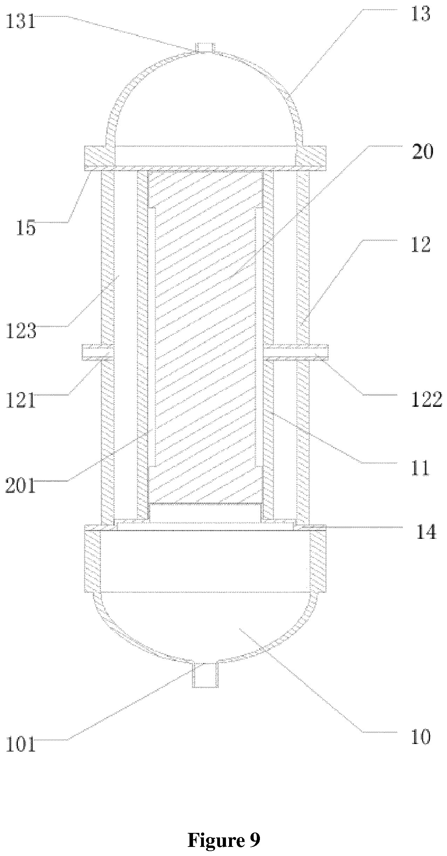

Further, with reference to Fig. 6 to Fig. 9, the water outlet pipe 122 is communicated with the first cylinder block 11 after passing through the second cylinder block 12.

Specifically, when a filter material 20 (a mixture of quartz sand and activated carbon and activated carbon) is arranged in the first cylinder block 11, second flow passages 201 are formed between the filter material 20 and the interior of the first cylinder block 11. Since the water to be purified is forced into the filter material 20 from both ends thereof during the water filtration of the filter material 20, the filtered water is discharged from outer peripheral walls of the filter material 20 and enters the second flow passages 201 and is finally discharged through the water outlet pipe 122.

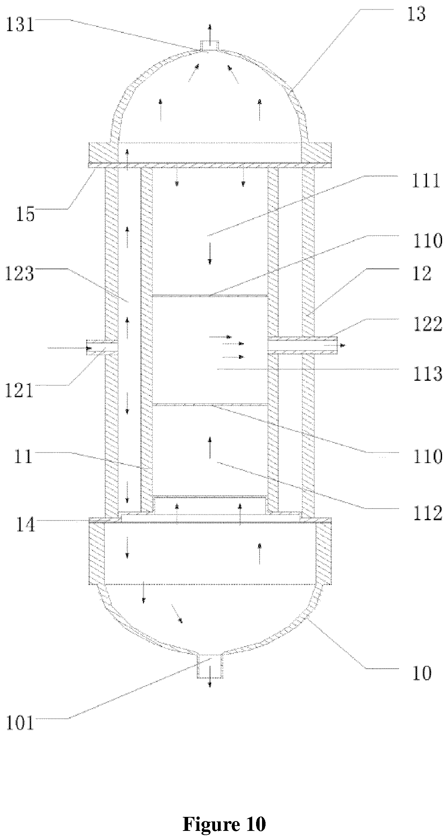

Further, with reference to Fig. 10, two baffles 110, having a plurality of permeable holes formed thereon, are arranged in the first cylinder block 11 and divide an inner chamber of the first cylinder block 11 into a first filtering zone 111, a temporary storage zone 113 and a second filtering zone 112 which are arranged in the radial direction along the first cylinder block 11; the water outlet pipe 122 is communicated with the temporary storage zone 113 after passing through the outer wall of the second cylinder block 12.

The filter material 20 is required to be added in the first cylinder block 11 during the filtration of the sediment or other larger particles in the water flow. In the embodiment, the first cylinder block 11 is divided into the first filtering zone 111, the temporary storage zone 113 and the second filtering zone 112 which are arranged in the radial direction along the first cylinder block 11 by arranging the two baffles 110. The filter material (a mixture of quartz sand and activated carbon and activated carbon) is added in both of the first filtering zone 111 and the second filtering zone 113. After being filtered through the first filtering zone 111 and the second filtering zone 112, the water enters the temporary storage zone 113 and then is discharged through the water outlet pipe 122. If there are more particulate matters such as sediment in the water to be purified, the filter material in the second filtering zone 112 will be gradually clogged to lose its filtering function, so that the filter material may be replaced at this moment. Furthermore, in case that the filter material in the first filtering zone 111 may be gradually contaminated due to more oil stains in the water (Of course, compared with common water purification devices, the service life of the filter material in the first filtering zone 111 is greatly prolonged), the filter material may be replaced to avoid the secondary contamination after the water filtration.

Further, with reference to Fig. 2, the cross-sectional area of an end face of an inner chamber of the first pressure cylinder 10 parallel to the first water flow end 10 gradually decreases from the first water flow end 104 to the first drainage end 102.

Specifically, the inner chamber of the first pressure cylinder 10 can be arranged in various shapes, such as square and cylinder. However, in the embodiment, the cross-sectional area of the end face of the inner chamber of the first pressure cylinder 10 parallel to the first water flow end 104 gradually decreases from the first water flow end 104 to the first drainage end 102 in order to facilitate discharging the filtered impurities from the first pressure cylinder 10, so that the filtered impurities in the water to be purified will be discharged through the first through-hole 101. Any dead angle will not be formed at the bottom in the first pressure cylinder 10 through such arrangement of the first pressure cylinder 10 so that the impurities will not be deposited at the bottom in the first pressure cylinder 10.

Further, with reference to Fig. 3, the cross-sectional area of an end face of an inner chamber of the second pressure cylinder 13 parallel to the second water flow end 134 gradually decreases from the second water flow end 134 to the second drainage end 133.

Specifically, although the second through-hole 131 for discharging the floating substances is opened at the top of the second pressure cylinder 13, a flush top of the inner chamber of the second pressure cylinder 13 inevitably results in that the partial floating substances cannot be discharged directly but accumulated, and the second through-hole 131 may be clogged by excessive accumulation. In the embodiment, the cross-sectional area of the end face of the inner chamber of the second pressure cylinder 13 parallel to the second water flow end 134 gradually decreases from the second water flow end 134 to the second drainage end 133, e.g., the inner chamber of the second pressure cylinder 13 may be arranged in a tapered shape, and a smooth inner wall of the second pressure cylinder 13 plays a role of guiding the floating substances during discharging, so that the floating substances may be discharged rapidly.

Preferably, a first drainage pipe having a first valve installed thereon is inserted into the first through-hole 101, and a second drainage pipe having a second valve installed thereon is inserted into the second through-hole 131.

The water treatment rate may be controlled by regulating the first and second valves, and the pressure inside the water purification device may be controlled by regulating the first and second valves. For example, the water in northern China contains much sediment, so that the second valve may be regulated to accelerate the discharge rate of the sewage in the first pressure cylinder 10, when the water with such water quality is filtered by the water purification device. The water in coastal areas contains higher salt content, so that the first valve and the second valve may be regulated to decrease the discharge rates of the first pressure cylinder 10 and the second pressure cylinder 13 and enhance the overall internal pressure of the water purification device so as to accelerate the filtering rate of the water to be filtered, when the water with such water quality is filtered by the water purification device.

Experimental test for filtering sediment, colloids and other large-grained impurities and oil stains by using a mixture of activated carbon and quartz sand:

After the water to be purified enters the water inlet 121 of the water purification device, under the action of the water inlet pressure and pressures of the first pressure cylinder 10 and the second pressure cylinder 13, sediment, silt, stains, particulate matters and colloids are separated by a mixture of quartz sand and activated carbon and activated carbon by regulating the pressures at the bottom and at the top of the water purification device, and then precipitated at a drain outlet of the first pressure cylinder 10 in a tapered shape. After being treated, the water passes through separation impurities, flows out of a clean water outlet and becomes clean. After the test, the decontamination rate of the water purification device to the sediment, colloids and other large-grained impurities is up to 80%, and that to the oil stains is up to 100%.

The above descriptions are merely preferred embodiments of the invention and not used for limiting the patent claims of the invention, any equivalent structure or equivalent process transformation, made by using contents of the description and drawings of the invention or applied to other relevant technical fields directly or indirectly, shall similarly be regarded as falling into the scope of patent protection of the invention.

## Claims

1. A water purification device, wherein the water purification device comprises a first pressure cylinder, a second pressure cylinder, a first cylinder block and a second cylinder block; the first pressure cylinder, the second cylinder block and the second pressure cylinder are successively connected to each other, and the first cylinder block is accommodated in the second cylinder block; two opposite ends of the first cylinder block are provided with openings arranged in a hollow shape, and the first cylinder block is configured to accommodate a filter material for filtering water; two opposite ends of the second cylinder block are provided with openings arranged in a hollow shape; the first pressure cylinder comprises a first water flow end provided with an opening for the water to flow, and a first drainage end formed with a first through-hole for the water to flow; and the second pressure cylinder is arranged in a hollow shape and comprises a second water flow end provided with an opening for the water to flow, and a second drainage end formed with a second through-hole for the water to flow; one end of the second cylinder block is connected to the first water flow end, and the other end thereof is connected to the second water flow end; first flow passages, which are communicated with the first pressure cylinder and the second pressure cylinder, are formed between the first cylinder block and the second cylinder block; a water inlet communicated with the first flow passage is formed on an outer wall of the second cylinder block, and a water outlet pipe communicated with the first cylinder block is further inserted into the outer wall of the second cylinder block; and prior to the water filtration of the water purification device, the first through-hole is in a closed state and the second through-hole is in an open state; during the sewage discharge of the device, the first through-hole and the second through-hole both are opened.

2. The water purification device according to claim 1, wherein a first connecting piece, which is configured to connect the first cylinder block and the second cylinder block to the first pressure cylinder, is further arranged between the second cylinder block and the first pressure cylinder; first diversion holes configured to communicate the first flow passage with the first pressure cylinder and second diversion holes configured to communicate the first cylinder block with the first pressure cylinder are arranged on the first connecting piece.

3. The water purification device according to claim 2, wherein the first connecting piece comprises a first connecting plate having a through-hole formed thereon, a periphery of the through-hole extends in a direction deviated from a surface of the first connecting plate to form a first circular cylinder, and a first baffle for closing ports of the first circular cylinder is arranged at one end of the first circular cylinder away from the first connecting plate, and the second diversion holes are arranged on the first baffle; peripheries of the second diversion holes extend in a direction deviated from a surface of the first baffle to form a second circular cylinder, and the first diversion holes are arranged on the first baffle on the periphery of the second circular cylinder; the first circular cylinder is located between the first connecting plate and the second circular cylinder, and the caliber of the first circular cylinder is greater than that of the second circular cylinder.

4. The water purification device according to claim 3, wherein the first circular cylinder is perpendicular to the first connecting plate and the second circular cylinder is perpendicular to the first baffle.

5. The water purification device according to claim 3, wherein a second baffle for closing ports of the second circular cylinder is arranged at one end of the second circular cylinder away from the first baffle, and a pressurizing hole is formed on the second baffle.

6. The water purification device according to any one of claims 2 to 5, wherein a first reinforcer connected to the second connecting piece is sleeved at a position on the first water flow end corresponding to an outer wall of the first pressure cylinder.

7. The water purification device according to any one of claims 1 to 5, wherein a second connecting piece, which is configured to connect the second cylinder block to the second pressure cylinder, is arranged between the second cylinder block and the second pressure cylinder, third diversion holes communicated with the first flow passage and a fourth diversion hole communicated with the first cylinder block are arranged on the second connecting piece.

8. The water purification device according to claim 7, wherein a second reinforcer connected to the second connecting piece is sleeved at a position on the second water flow end corresponding to an outer wall of the second pressure cylinder.

9. The water purification device according to any one of claims 1 to 5, wherein two baffles, having a plurality of through-holes formed thereon, are arranged in the first cylinder block and divide an inner chamber of the first cylinder block into a first filtering zone, a temporary storage zone and a second filtering zone which are arranged in the radial direction along the first cylinder block; the water outlet pipe is communicated with the temporary storage zone after passing through the outer wall of the second cylinder block.

10. The water purification device according to any one of claims 1 to 5, wherein a first drainage pipe is inserted into the first through-hole and a second drainage pipe is inserted into the second through-hole, and water flow regulating valves are arranged on both of the first drainage pipe and the second drainage pipe.
